# EUROPEAN PATENT SPECIFICATION

(11) **EP 3 070 045 B1**
(45) Date of publication and mention of the grant of the patent: **06.10.2021**
(21) Application number: 15290072.6
(22) Date of filing: 16.03.2015
(51) Int. Cl.: B66D 1/76, B64D 1/22, B66D 1/12, B66D 1/39, B66D 1/50

(54) **A WINCH SYSTEM AND A ROTARY-WING AIRCRAFT HAVING SUCH A WINCH SYSTEM**
WINDENSYSTEM UND DREHFLÜGELFLUGZEUG MIT SOLCH EINEM WINDENSYSTEM
SYSTÈME DE TREUIL ET AÉRONEF À VOILURE TOURNANTE PRÉSENTANT UN TEL SYSTÈME

(43) Date of publication of application: 21.09.2016
(73) Proprietor: Airbus Helicopters, 13725 Marignane Cedex (FR)
(72) Inventor: Sequera, Damien, 30900 Nîmes (FR); Liefmann, Benny, 34090 Montpellier (FR); Bojarczak, Piotr, 26-600 Radom (PL); Kolodziejczyk, Krzysztof, 26 - 624 (PL); Król, Kazimierz, 26-804 Stromiec (PL); Olejarczyk, Krzysztof, 26-630 Jedlnia Letnisko (PL); Pniewski, Roman, 26-600 Radom (PL); Wiklo, Marcin, 26-600 Radom (PL)
(74) Representative: GPI & Associés

(56) References cited:
- WO-A1-89/09744
- GB-A- 255 302
- GB-A- 500 209
- GB-A- 1 037 607
- GB-A- 1 127 769
- GB-A- 2 015 461
- US-B2- 7 909 308

## Description

The present invention is related to a winch system with a storage subsystem and a traction subsystem, said winch system comprising the features of claim 1. The present invention is further related to a rotary-wing aircraft with a winch system, said rotary-wing aircraft comprising the features of claim 20.

Winch systems are well-known in the art and, e. g., described in the documents CN 102 849 638 B, EP 0 481 591 A1, EP 1 323 663 A1, FR 2 231 606 A1, US 4,231,551, US 4,426,064 and US 5,009,353. Such winch systems usually comprise a single drum for storing and delivering as well as extending and retracting an associated rope or cable in operation. The single drums of such winch systems can be manually powered or motorized and driven via an appropriate reduction gearing, such as a planetary or cycloidal reduction gearing, which is e. g. known from the documents US 3,320,828 or EP 1 232 113 B1. Moreover, the single drums of such winch systems can be provided with a brake that is adapted for braking the single drums at least in an associate park mode.

Furthermore, it is well-known in the art to use winch systems together with vehicles, e. g. rotary-wing aircrafts, and in particular helicopters, which are commonly used to fulfil aerial transportation and delivery tasks, as well as rescue operations. In all of these cases, lifting and carrying of an external load can be required, which can be a non-human external load or non-human external cargo (NHEC), e. g. in the case of aerial transportation and delivery tasks, or a human external load or human external cargo (HEC), e. g. in rescue operations.

In order to enable a given helicopter for lifting and carrying such an external load, the helicopter can be equipped as described above with suitable hoist means, such as a winch system. Thus, an external load can be suspended from the helicopter and also lifted up into the helicopter during flight, e. g. during hovering, or descended from the given helicopter at a predetermined location.

The documents US 3,809,334 and US 7,909,308 describe examples of helicopters that are equipped with corresponding winch systems. More specifically, according to the document US 3,809,334, the helicopter's winch system comprises a single drum for storing and delivering as well as extending and retracting an associated external load mass rope or cable in operation, while according to the document US 7,909,308 two separate drums are arranged perpendicular to each other and driven by a single motor, wherein a first drum defines a storage drum that is provided for storing and delivering an associated external load mass rope or cable, while a second drum defines a traction drum that is provided for extending and retracting the external load mass rope or cable in operation.

The document GB 1 037 607 A describes an apparatus for the handling and stowing of mooring ropes on ships. This apparatus comprises a reeling machine with a reel drum, mounted on a main deck and a rope wound a number of turns around a second drum on a top deck. The end of the rope is fixed to the reel drum of the reeling machine. When an operator starts an electric motor at a controller on the top deck, the reel drum of the reeling machine hauls in the rope. Depending on the tension of the rope a torque converter will control the speed of the reel drum. The second drum on the top deck is not connected with a power unit and the movement is only dependent on the electric motor of the reeling machine.

Other winch systems that make use of separate drums, which can also be arranged perpendicularly or, alternatively, in series or in parallel, are also known. For instance, such winch systems are described in the document "Handbook of fibre rope technology", H. A. McKenna, J. W. S. Hearle and N. O'Hear, The Textile Institute, CRC Press LLC Boca Raton USA, 2004, ISBN 0-8493-2588-9.

However, these winch systems are not specifically dedicated to use in helicopters, where applicable safety requirements are particularly severe, as in case of deficiency, malfunction, blocking and/or jamming of the winch system the helicopter and respective passengers and/or HEC as well as NHEC should not be endangered. Furthermore, in order to increase the helicopter's autonomy in operation, an underlying energy consumption of the winch system and, more specifically, of an associated drive mechanism, as well as a corresponding aerodynamic impact thereof, should be minimized. Moreover, due to limited available space in a helicopter, an overall complexity of the winch system and its overall weight should likewise by minimized.

It is, therefore, an object of the present invention to provide a new winch system that is suitable for use with a rotary-wing aircraft, in particular with a helicopter, and that fulfils all applicable safety requirements and provides at least for reduced energy consumption and reduced aerodynamic impact and weight.

This object is solved by a winch system that comprises the features of claim 1.

More specifically, according to the invention a winch system comprises a storage subsystem and a traction subsystem. The traction subsystem comprises a traction drum assembly with a traction drum for extending or retracting an external load mass rope or cable in operation. The storage subsystem comprises a storage drum for storing the external load mass rope or cable that is fed in operation from the traction drum or for delivering the external load mass rope or cable in operation to the traction drum. The storage drum and the traction drum are interconnected by means of a connecting portion of the external load mass rope or cable that is arranged between the storage drum and the traction drum. The traction drum and the storage drum are adapted to be driven in operation such that a current rope or cable tension of the connecting portion of the external load mass rope or cable is comprised in a predetermined interval of tension values so that sagging of the connecting portion is avoided. Said storage drum is axially moveable by means of a diamond screw in operation such that said connecting portion of said external load mass rope or cable is arranged stationary between said storage drum and said traction drum.

It should be noted that in the context of the present invention the term "external load mass rope or cable" refers to a cord-like element that is suitable for use in lifting and carrying weights and that can be made of a variety of differing materials, also comprising materials that are well-known in the art. For instance, this cord-like element can be made of metal and, thus, be implemented as a cable. Alternatively, this cord-like element can be made e. g. of synthetic material and, thus, be implemented as a rope. However, an underlying choice of a respectively used material can be based on application-specific criteria, such as a weight that is to be lifted, and has no influence on a general functionality of the inventive winch system, which can also be used with other cord-like elements, such as e. g. chains.

Furthermore, it should be noted that the term "connecting portion of the external load mass rope or cable" does not describe a particular section of the external load mass rope or cable. Instead, when winding the external load mass rope or cable on the storage drum or unwinding the external load mass rope or cable from the storage drum, the external load mass rope or cable as such is running along the way defined between the storage drum and the traction drum, so that continuously different sections of the external load mass rope or cable are arranged between the storage drum and the traction drum, thereby respectively defining the connecting portion, i. e. a drum connecting rope or cable section between the storage drum and the traction drum.

Advantageously, use of a storage subsystem and a traction subsystem allows providing a safe and reliable winch system by separating the functions of storing/delivering and extending/retracting of an associated external load mass rope or cable, wherein a current rope or cable tension of a connecting portion of the associated external load mass rope or cable is maintained within a predetermined interval of tension values during operation in order to optimize winding or unwinding of the latter onto or from a storage drum of the storage subsystem. More specifically, the current rope or cable tension preferably remains at least approximately constant during operation of the winch system, so that blocking and jamming of the associated external load mass rope or cable can be prevented efficiently. Furthermore, the winch system according to the present invention is comparatively compact with reduced overall dimensions and improved energy efficiency.

According to a preferred embodiment, a control system is provided that is adapted for driving the storage drum in operation, such that the current rope or cable tension of the connecting portion is comprised in the predetermined interval of tension values.

According to a further preferred embodiment, the control system is adapted for controlling a synchronization shaft that is provided for driving the storage drum in operation. The synchronization shaft is coupled with a torque limiter that is adapted to maintain the current rope or cable tension of the connecting portion in operation within the predetermined interval of tension values.

According to a further preferred embodiment, the traction subsystem comprises a drive motor for driving the traction drum. The drive motor is coupled to the control system for driving the storage subsystem via the control system.

Advantageously, by implementing the inventive winch system with a single drive motor an underlying energy consumption of the winch system and, more specifically, of an associated drive mechanism, as well as an overall complexity of the inventive winch system and its overall weight, can be reduced significantly. Furthermore, the inventive winch system with a single drive motor is suitable for preserving resources and can be produced in a cost efficient manner.

According to a further preferred embodiment, the control system comprises a first synchronization shaft and a second synchronization shaft. The first synchronization shaft is driveable by the drive motor and comprises a free wheel that can be coupled to a first pinion, and the second synchronization shaft is adapted for driving the storage drum and comprises a second pinion. The first pinion and the second pinion are coupled by means of a drive chain or belt.

By implementing the control system in the form of a mechanical control system, a comparatively simple overall configuration can be provided, which is easy to repair and maintain. Accordingly, corresponding repair and maintenance costs can be reduced significantly.

According to a further preferred embodiment, the free wheel is adapted for coupling the first pinion to the first synchronization shaft during storing of the external load mass rope or cable that is fed in operation from the traction drum on the storage drum.

According to a further preferred embodiment, the second synchronization shaft comprises a free wheel that is adapted for being engaged in a delivering and extending mode of the winch system in order to block rotation of the second synchronization shaft in a delivering rotational direction.

According to a further preferred embodiment, the traction drum is driveable by means of a drive shaft. The traction drum assembly comprises a torque limiter that is adapted for decoupling the traction drum from the drive shaft, if torque acting on the traction drum in operation exceeds a predetermined maximum allowable torque.

According to a further preferred embodiment, the traction subsystem comprises a first drive motor for driving the traction drum and the storage subsystem comprises a second drive motor for driving the storage drum.

According to a further preferred embodiment, a tension sensor is provided for detecting the current rope or cable tension of the connecting portion of the external load mass rope or cable. A control system is provided that is adapted for driving the second drive motor on the basis of the detected current rope or cable tension.

According to one aspect, a storage motor controller is provided, which is adapted for keeping the rope or cable tension of the connecting portion of the external load mass rope or cable, i. e. the drum connecting rope or cable section between the storage drum and the traction drum, in operation at least essentially constant. Preferably, this is realized by a continuous measurement of the rope or cable tension by means of the tension sensor, and by a continuous correction of a drive current flowing through the second drive motor, which is associated with the storage subsystem. Preferably, the storage motor controller will operate in current control mode. This preferably allows the second drive motor to keep the rope or cable tension of the drum connecting rope or cable section at least essentially constant in operation. Preferentially, communication between the storage motor controller (slave) and an associated winch system main controller (master) is performed via RS 232 bus standard.

Furthermore, a traction motor controller associated with the first drive motor, which is associated with the traction subsystem, preferably operates in speed control mode. This mode preferentially allows keeping a predetermined winding or unwinding speed of the external load mass rope or cable at least essentially constant. Preferentially, communication between the traction motor controller (slave) and the associated winch system main controller (master) is also performed via RS 232 bus standard.

In order to eliminate occurrence of slip of the external load mass rope or cable on the traction drum, the associated winch system main controller preferably determines a difference in speed between the traction drum and the storage drum. Thus, the storage motor controller can increase a torque applied to the storage drum until the difference in speed is unequal to zero, what in turn corresponds to slip elimination.

Preferably, the winch system main controller is adapted for synchronizing both motor controllers, i. e. the storage motor controller and the traction motor controller. Furthermore, the winch system main controller is preferentially adapted for initializing and managing exchange of information between both motor controllers. This information is preferably transmitted via RS 232 bus standard.

Moreover, the winch system main controller is preferably adapted for gathering and processing information about a current load, e. g. by means of a force sensor, and a current cable length, e. g. by means of an absolute encoder sensor, of the drum connecting rope or cable section between the storage drum and the traction drum. Furthermore, the winch system main controller is preferably adapted for receiving information about a current temperature of the traction and storage motor. Preferentially, the current temperature of the traction and storage motor is determined on request of the winch system main controller by the traction motor controller and/or the storage motor controller and transmitted to the winch system main controller via RS 232 bus standard. Finally, the winch system main controller preferably also handles control desktop tasks for a respective hoist or winch system operator and, in the case of a rotary-wing aircraft, for the pilot.

According to one aspect, an overload condition of the winch system and, in particular, of the external load mass rope or cable is either determined directly by means of the above-mentioned force sensor, or indirectly by measurement and evaluation of an electrical current flowing through corresponding motor windings of the traction motor. In the latter case, the electrical current is preferably measured and evaluated by means of the traction motor controller.

Preferably, the overload condition is controlled only during lifting up of an external load, i. e. when winding up the external load mass rope or cable on the storage drum. During descending of the external load, i. e. during unwinding of the external load mass rope or cable from the storage drum, control of the overload condition is preferably only performed by a respective hoist or winch system operator. If the overload condition occurs, preferably the electrical current flowing through the traction motor is suspended and an associated brake is switched on.

According to a further preferred embodiment, the control system is adapted for slowing down or accelerating the second drive motor in operation, if the detected current rope or cable tension of the connecting portion of the external load mass rope or cable deviates from a predetermined rope or cable tension by more than a predetermined allowable tension deviation value.

According to a further preferred embodiment, the control system is adapted for inverting a rotation direction of the second drive motor, if no further slowing down is possible.

Preferably, this control system exerts an electronic control of the winch system in operation and electronically synchronizes the traction subsystem and the storage subsystem. Thus, a very precise synchronization can be achieved, as well as an optimized adjustment of the rotation speeds of the traction drum and the storage drum relative to each other. Furthermore, by providing such an electronic control system, the compactness of the winch system as a whole can be increased and only a reduced number of mechanical components is required for realization thereof, so that the winch system has a reduced weight and is mechanically less vulnerable.

According to a further preferred embodiment, the traction drum is driveable by means of a first drive shaft that is driveable by the first drive motor, and the storage drum is driveable by means of a second drive shaft that is driveable by the second drive motor. The first and second drive shafts are at least approximately arranged in parallel.

According to a further preferred embodiment, the tension sensor comprises a mechanical, electrical and/or optical sensor.

According to a further preferred embodiment, the traction drum is driveable by means of a drive shaft that is driveable by the first drive motor. The traction drum assembly comprises a torque limiter that is adapted for decoupling the traction drum from the drive shaft, if torque acting on the traction drum in operation exceeds a predetermined maximum allowable torque.

By way of example, the torque limiter is arranged inside of the traction drum.

Advantageously, the torque limiter is arranged at a position close to an end of the kinematic chain that is defined by the winch system. Accordingly, all components that are upstream of the torque limiter in this kinematic chain do not need to fulfil the very severe conventional certification requirements.

In an exemplary realisation, the traction drum assembly comprises a reduction gearing. The torque limiter is arranged between the reduction gearing and the traction drum.

In a further exemplary realisation, the traction drum assembly comprises a housing. The traction drum is arranged inside of the housing and mounted so as to be rotatable in the housing.

By way of example, the torque limiter comprises at least two pressure plates that are mounted to the drive shaft, and at least one torque limiter disk that is mounted to the traction drum and arranged between the at least two pressure plates. The at least two pressure plates are pressed against the at least one torque limiter disk for creating a friction force between the at least two pressure plates and the at least one torque limiter disk.

In an exemplary realisation, a plurality of plate springs are mounted to the drive shaft for exerting a predetermined pressure force on the at least two pressure plates in order to create the friction force.

In a further exemplary realisation, the plate springs are embodied as Belleville spring washers.

According to a further preferred embodiment, the traction drum assembly comprises a housing. The traction drum assembly further comprises a reduction gearing that is arranged inside of the housing.

According to a further preferred embodiment, the reduction gearing is a cycloidal or epicycloidal reduction gearing.

Such a cycloidal or epicycloidal reduction gearing has a comparatively high transmission rate and allows for comparatively high overload conditions compared to conventional reduction gearings. For instance, a cycloidal reduction gearing has a comparatively high rate of yield of more than 95%, compared to conventional reduction gearings with a rate of yield of less than 70%. Thus, the traction subsystem can be driven by means of a drive motor with reduced output power, thereby saving electrical energy in operation. Furthermore, by using such a drive motor with reduced output power, a corresponding thermal dissipation of this drive motor in operation can be reduced, thereby reducing a respectively required lubrication thereof and even allowing to omit a hydraulic cooling thereof.

According to a further preferred embodiment, a motor control is provided for controlling the second drive motor on the basis of a momentary operating current of the second drive motor.

According to a further preferred embodiment, a brake is associated with the traction drum and/or the storage drum for braking the traction drum and/or the storage drum in an associated park mode. The brake is preferably embodied as a Weston brake. According to one aspect, each drive motor used in realization of the inventive winch system is provided with such a brake.

In a further exemplary realisation a drum assembly for a winch system is provided, comprising a housing and a traction drum that is arranged inside of the housing and mounted so as to be rotatable in the housing. The traction drum is driveable by means of a drive shaft. A torque limiter is provided that is adapted for decoupling the traction drum from the drive shaft if a torque acting on the traction drum in operation exceeds a predetermined maximum allowable torque. The torque limiter is arranged inside of the traction drum.

The present invention further provides a rotary-wing aircraft with a winch system that comprises a storage subsystem and a traction subsystem. The traction subsystem comprises a traction drum assembly with a traction drum for extending or retracting an external load mass rope or cable in operation and further comprises a first drive motor for driving the traction drum. The external load mass rope or cable in operation and further comprises a first drive motor for driving the traction drum. The storage subsystem comprises a storage drum for storing the external load mass rope or cable that is fed in operation from the traction drum or for delivering the external load mass rope or cable in operation to the traction drum. The storage subsystem further comprises a second drive motor for driving the storage drum. The storage drum and the traction drum are interconnected by means of a connecting portion of the external load mass rope or cable. A tension sensor is provided for detecting a current rope or cable tension of the connecting portion of the external load mass rope or cable. A control system is provided that is adapted for driving the second drive motor on the basis of the detected current rope or cable tension.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective view of a section of a rotary-wing aircraft with a winch system according to the invention,
- Figure 2 shows a schematic view of the winch system of Figure 1 according to a first embodiment,
- Figure 3 shows a sectional view of a traction drum assembly according to the present invention,
- Figure 4 shows a schematic view of the winch system of Figure 1 according to a second embodiment, and
- Figure 5 shows a function diagram of the winch system of Figure 4.

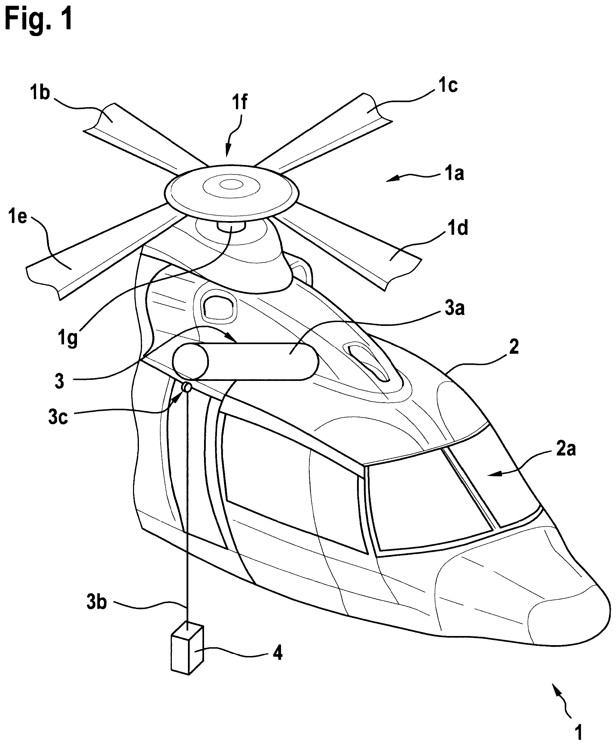

Figure 1 shows a rotary-wing aircraft 1 with a fuselage 2 that illustratively defines a cabin 2a. The rotary-wing aircraft 1 comprises at least one main rotor 1a for providing lift and forward or backward thrust during operation. The at least one main rotor 1a is preferably embodied as a multi-blade rotor that comprises a plurality of rotor blades 1b, 1c, 1d, 1e that are mounted at an associated rotor head 1f to a rotor shaft 1g, which rotates in operation of the rotary-wing aircraft 1 around an associated rotor axis.

According to one aspect, the rotary-wing aircraft 1 comprises a winch system 3. Preferably, the latter comprises an outer shell 3a that accommodates the winch system 3 at least partly or that serves at least for guiding an associated external load mass rope or cable 3b. Preferentially, this external load mass rope or cable is guided via a suitable, optional guide pulley 3c to an external load 4, which is illustratively attached to the external load mass rope or cable 3b and, for instance, embodied as a NHEC.

By way of example, the rotary-wing aircraft 1 is embodied as a helicopter and, therefore, also referred to hereinafter as the "helicopter 1" for simplicity and clarity. It should, however, be noted that the present invention is not limited to helicopters and can likewise be applied to other rotary-wing aircrafts having a winch system according to the present invention. It should further be noted that the helicopter 1 is only shown in part for simplicity and clarity of the drawings, as the general configuration of the helicopter 1 as such is not part of the invention.

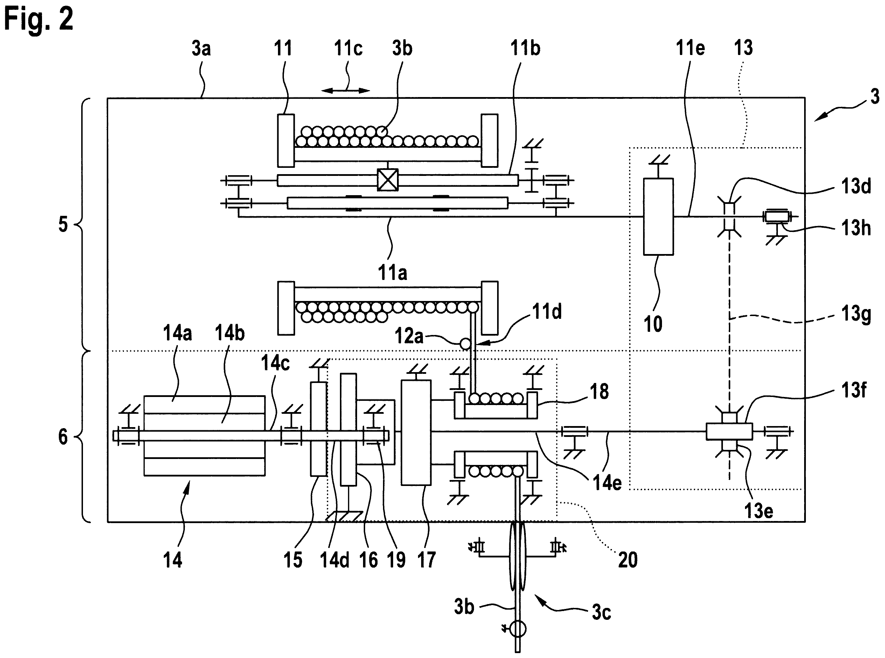

Figure 2 shows the winch system 3 of Figure 1 with the outer shell 3a. The latter illustratively completely accommodates the winch system 3. However, in variants of the present invention the outer shell 3a may also accommodate only parts of the winch system 3, which comprises according to one aspect of the present invention a storage subsystem 5 and a traction subsystem 6.

Preferably, the traction subsystem 6 comprises at least a traction drum assembly 20 with a traction drum 18 that is provided for extending or retracting the external load mass rope or cable 3b of Figure 1 in operation via the guide pulley 3c of Figure 1. The traction drum 18 is connected to a storage drum 11 of the storage subsystem 5 by means of a connecting portion 11d of the external load mass rope or cable 3b, wherein the connecting portion 11d is arranged between the traction drum 18 and the storage drum 11. The latter is provided for storing the external load mass rope or cable 3b that is fed in operation from the traction drum 18 or for delivering the external load mass rope or cable 3b in operation to the traction drum 18.

The storage drum 11 preferably comprises a greater diameter than the traction drum 18 and is adapted for storing the external load mass rope or cable 3b in a plurality of layers. Preferentially, the plurality of layer amounts up to a maximum of seven layers. In contrast, the traction drum 18 is preferably adapted for supporting not more than a single layer of the external load mass rope or cable 3b. Preferentially, the traction drum 18 is driven in operation such that always exactly one layer of the external load mass rope or cable 3b is arranged thereon.

According to one aspect of the present invention, the traction drum 18 and the storage drum 11 are adapted to be driven in operation such that a current rope or cable tension of the connecting portion 11d of the external load mass rope or cable 3b is comprised in a predetermined interval of tension values. To this end, a control system 13 is provided that is preferably adapted for driving the storage drum 11 in operation such that the current rope or cable tension of the connecting portion 11d is comprised in the predetermined interval of tension values. Optionally, a rope or cable tensioning device 12a can be provided for tensioning the connecting portion 11d.

More specifically, the control system 13 is preferentially adapted for controlling a synchronization shaft 11e that is provided for driving the storage drum 11 in operation. This synchronization shaft 11e is coupled with a torque limiter 10 that is adapted to maintain the current rope or cable tension of the connecting portion 11d in operation within the predetermined interval of tension values such that the connecting portion 11d is always tensioned, so that sagging of the connecting portion 11d is avoided. The torque limiter 10 is preferably further adapted for decoupling the storage drum 11 from the synchronization shaft 11e, if torque acting on the storage drum 11 in operation exceeds a predetermined maximum allowable torque.

Preferably, the torque limiter 10 connects the synchronization shaft 11e to the storage drum 11, i. e. to a drive shaft 11a of the storage drum 11. Rotation of this drive shaft 11a leads to a rotation of the storage drum 11 by means of the torque limiter 10 , which is preferentially further provided with a diamond screw 11b, such that the storage drum 11 can be moved in axial direction of the drive shaft 11a in operation, as indicated with an arrow 11c. Such a movement of the storage drum 11 in the direction of the arrow 11c is preferably performed such that the connecting portion 11d between the storage drum 11 and the traction drum 18 is arranged stationary between the storage drum 11 and the traction drum 18. In this context, the term "stationary" refers to an arrangement of the connecting portion 11d between the storage drum 11 and the traction drum 18 with a predetermined, preferentially at least essentially constant angle with respect to corresponding rotation axes of the storage drum 11 and the traction drum 18. This angle illustratively amounts to 90°. The drive shaft 11a and the diamond screw 11b are illustratively part of the storage subsystem 5.

According to one aspect of the present invention, the synchronization shaft 11e is connected to the storage drum 11 via the torque limiter 10 and is equipped with a pinion 13d. Furthermore, the synchronization shaft 11e is equipped with a free wheel 13h, such as e. g. a ratched wheel, the function of which is described below.

The pinion 13d is preferably coupled with another pinion 13e by means of a drive chain or belt 13g. The other pinion 13e is mounted to a synchronization shaft 14e that is further equipped with a free wheel 13f, such as e. g. a ratched wheel, which can be engaged with the other pinion 13e. Preferably, the pinion 13e and the free wheel 13f are engaged in operation for driving the drive chain or belt 13g and, thus, the synchronization shaft 11e and the storage drum 11 during winding of the external load mass rope or cable 3b onto the storage drum 11, while this engagement is preferentially released during unwinding of the external load mass rope or cable 3b from the storage drum 11. In other words, the free wheel 13f is preferably adapted for coupling the other pinion 13e to the synchronization shaft 14e only during storing of the external load mass rope or cable 3b that is fed in operation from the traction drum 18 on the storage drum 11, such that the synchronization shaft 14e rotates the synchronization shaft 11e via the free wheel 13f, the pinions 13e, 13d, and the drive chain or belt 13g in operation, when the traction drum 18 rotates for retracting the external load mass rope or cable 3b.

Illustratively, the synchronization shafts 11e, 14e, the pinions 13d, 13e, the free wheels 13f, 13h, the drive chain or belt 13g and the torque limiter 10 define the control system 13. Thus, the latter is embodied in the form of a mechanical control system according to a first embodiment of the present invention.

According to one aspect of the present invention, the synchronization shaft 14e is at least indirectly connected to a drive motor 14 of the traction subsystem 6, which is, thus, coupled to the control system 13. Illustratively, the drive motor 14 is provided for driving the traction drum 18 in operation via an associated drive shaft 19 and for driving the storage subsystem 5 in at least one operating mode via the control system 13. The drive shaft 19 and the drive shaft 11a described above are preferably at least approximately arranged in parallel.

By way of example, the drive motor 14 is an electric motor with a stator 14a, a rotor 14b and a motor shaft 14c. The latter is preferably connected to a drive element 14d, which is illustratively embodied as a transmission shaft. According to one aspect of the present invention, a brake 15 is associated with the motor shaft 14c and/or the transmission shaft 14d. The brake 15 is preferably provided for braking the traction drum 18 at least in an associated park mode, when the drive motor 14 is switched off. Preferentially, the brake 15 is embodied as a Weston brake.

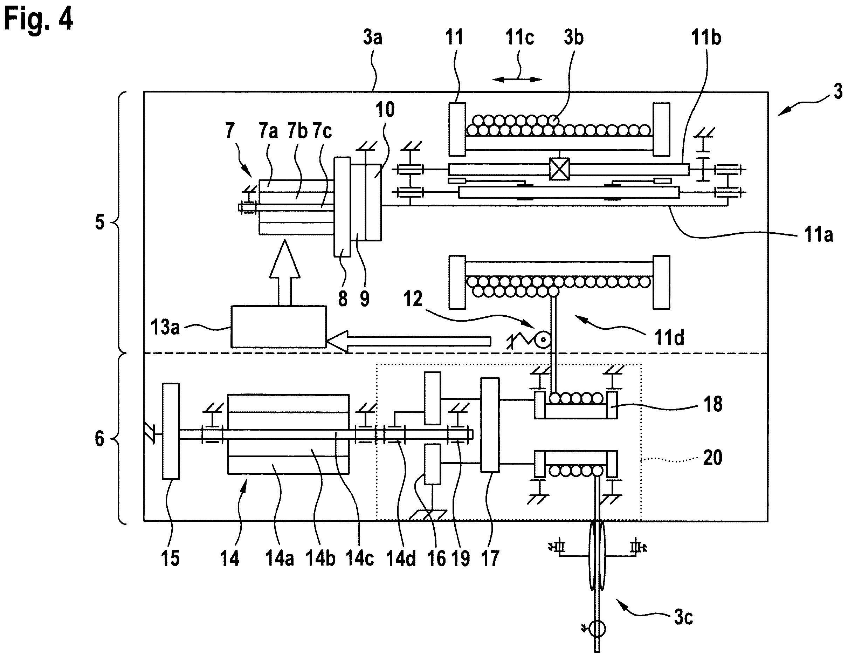

It should be noted that illustratively only the traction subsystem 6 is provided with a brake, i. e. the brake 15. However, the storage subsystem 5 may likewise be equipped with such a brake, as e. g. illustrated in Figure 4, wherein the storage subsystem 5 is illustratively equipped with a brake 9.

The transmission shaft 14d is provided for transmitting torque that is created in operation by the motor shaft 14c to a reduction gearing 16. However, the transmission shaft 14d is only shown by way of example and not mandatory for realization of the traction subsystem 6, wherein the motor shaft 14 may alternatively directly be coupled to the reduction gearing 16, which is preferentially embodied as a cycloidal or epicycloidal reduction gearing.

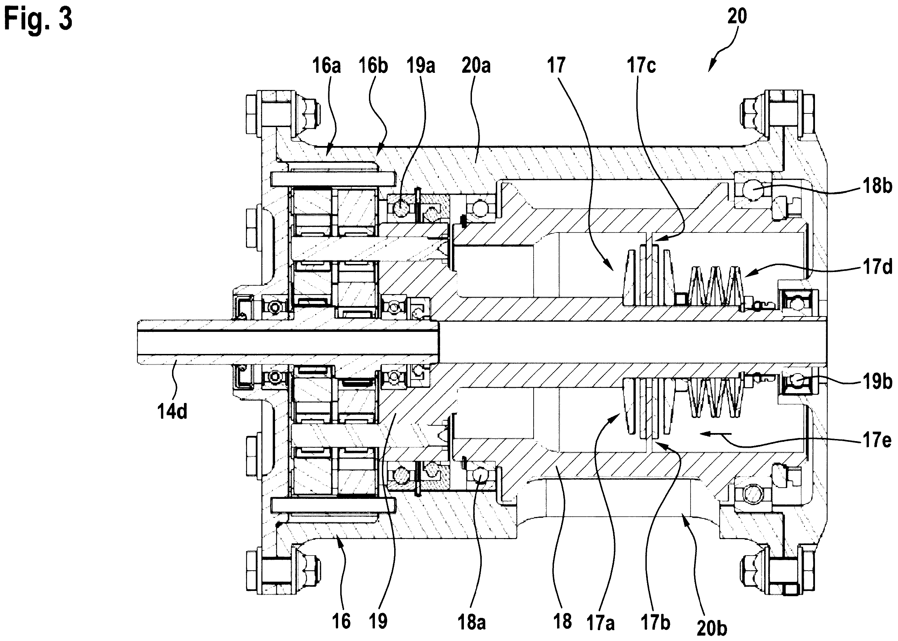

The cycloidal or epicycloidal reduction gearing 16 is coupled with the drive shaft 19 of the traction subsystem 6, which is in turn coupled with the traction drum 18 by means of a torque limiter 17. The latter is coupled with the synchronization shaft 14e of the control system 13 and preferably adapted for decoupling the traction drum 18 from the drive shaft 19, if torque acting on the traction drum 18 in operation exceeds a predetermined maximum allowable torque. The drive shaft 19, the traction drum 18, the torque limiter 17 and the cycloidal or epicycloidal reduction gearing 16 define the traction drum assembly 20, which is described in greater detail below with reference to Figure 3.

In the following, an exemplary operation of the winch system 3 is described. More specifically, assume that in a delivering and extending mode of the winch system 3 the drive motor 14 rotates the motor shaft 14c, the drive shaft 19 and the synchronization shaft 14e into a first rotational direction. In this case, the torque limiter 17 preferably entrains the traction drum 18 likewise into a rotation into this first rotational direction such that the external load mass rope or cable 3b is extended by the traction drum 18 via the guide pulley 3c, e. g. for descending the external load 4 of Figure 1 from the helicopter 1 of Figure 1.

According to one aspect, as already mentioned above, the control system 13 is operable in this delivering and extending mode such that the free wheel 13f and the pinion 13e are disengaged, so that the traction drum 18 pulls the external load mass rope or cable 3b from the storage drum 11 by exerting a continuous traction force via the connecting portion 11d on the external load mass rope or cable 3b that is stored on the storage drum 11. Accordingly, the storage drum 11 is also rotated in the first rotational direction for delivering the external load mass rope or cable 3b to the traction drum 18, as required, and rotates the drive shaft 11a in the first rotational direction, while the free wheel 13h provided on the synchronization shaft 11e is engaged so that rotation of the synchronization shaft 11e in a delivering rotation direction, i. e. the first rotational direction, is blocked by the free wheel 13h.

However, in order to allow rotation of the drive shaft 11a while avoiding an uncontrolled delivery of the external load mass rope or cable 3b, the storage drum 11 can be rotated against a holding or retaining force exerted by the torque limiter 10, which controls the storage drums rotational speed and ensures that the storage drum 11 is not inappropriately accelerated. Nevertheless, this is preferably controlled by a respective hoist or winch system operator.

In a storing and retracting mode of the winch system 3, the drive motor 14 rotates the motor shaft 14c, the drive shaft 19 and the synchronization shaft 14e into a second rotational direction, which is opposed to the first rotational direction. In this case, the torque limiter 17 preferably entrains the traction drum 18 likewise into a rotation into this second rotational direction such that the external load mass rope or cable 3b is retracted by the traction drum 18 via the guide pulley 3c, e. g. for lifting the external load 4 of Figure 1 up into or at least towards the helicopter 1 of Figure 1.

According to one aspect, as already mentioned above, the control system 13 is operable in this storing and retracting mode so that the synchronization shaft 14e rotates the synchronization shaft 11e as described above via the free wheel 13f, the pinions 13e, 13d and the drive chain or belt 13g, while the free wheel 13h provided on the synchronization shaft 11e is disengaged and, consequently, allows rotation of the synchronization shaft 11e. The synchronization shaft 11e in turn rotates the drive shaft 11a via the torque limiter 10 into the second rotational direction. Accordingly, the storage drum 11 is likewise rotated into the second rotational direction for storing the external load mass rope or cable 3b that is fed to the storage drum 11 from the traction drum 18. Preferably, the pinions 13e, 13d are selected such that the storage drum 11 is rotated moderately faster than the traction drum 18 in the storing and retracting mode.

In a park mode of the winch system 3, the drive motor 14 is switched off. For instance, the park mode is selected when the external load 4 of Figure 1 was lifted up towards the helicopter 1 of Figure 1 in order to remain suspended therefrom during a subsequent flight mission. In this case, the brake 15 brakes the motor shaft 14c, i. e. the transmission shaft 14d, so that the cycloidal or epicycloidal reduction gearing 16 is not driven and, thus, inactive. Consequently, the traction drum 18 and the storage drum 11 are not entrained into rotation by means of the drive motor 14 and the external load mass rope or cable 3b is neither retracted/stored nor extended/delivered.

Assume now that an incident occurs e. g. when the winch system 3 is set to the park mode. For instance, the external load mass rope or cable 3b that is attached to the external load 4 of Figure 1 gets caught during the flight mission e. g. in a tree. In this case, the external load mass rope or cable 3b that is caught in the tree exerts a rotational force on the traction drum 18 that leads to a rotation of the latter in the first rotational direction described above, if the rotational force is greater than a holding or retaining force that is exerted by the torque limiter 17 onto the traction drum 18. Consequently, the connecting portion 11d of the external load mass rope or cable 3b exerts a rotational force on the storage drum 11 that leads to a rotation of the latter in the first rotational direction described above, if the rotational force is greater than the holding or retaining force that is exerted by the torque limiter 10 onto the storage drum 11. Thus, winch system 3 is switched to an associated safety mode and the external load mass rope or cable 3b is delivered from the storage drum 11 to the traction drum 18 and extended from the latter as described above. According to one aspect, occurrence of this safety mode is indicated to a pilot of the helicopter 1 and/or the winch system operator, which thus may take appropriate counter actions such that the helicopter 1 of Figure 1 and all persons on board of the helicopter 1 and preferably also any possible HEC and/or NHEC are not endangered.

It should be noted that switching to the safety mode starting from the park mode is only described by way of example and not for limiting the present invention thereto. Instead, switching to the safety mode may likewise occur if the winch system 3 is operated in the above-described delivering and extending mode or the above-described storing and retracting mode.

Figure 3 shows the traction drum assembly 20 with the traction drum 18 of Figure 2, which is illustratively embodied according to one aspect of the present invention. As described above, the traction drum 18 is driveable by means of the drive shaft 19 of Figure 2, which in turn is driveable by the drive motor 14 of Figure 2 and, more specifically, by the cycloidal or epicycloidal reduction gearing 16 via the transmission shaft 14d, and can be decoupled from the drive shaft 19 by means of the torque limiter 17, if torque acting on the traction drum 18 in operation exceeds a predetermined maximum allowable torque.

More specifically, according to one aspect of the present invention the torque limiter 17 is preferably arranged inside of the traction drum 18 that, in turn, is preferably arranged inside of a housing 20a and mounted so as to be rotatable in this housing 20a. By way of example, the traction drum 18 is mounted to the housing 20a by means of bearings 18a, 18b, which are illustratively, but not mandatorily, embodied as roller or ball bearings.

The housing 20a illustratively comprises at least a rope or cable outlet 20b, through which the external load mass rope or cable 3b of Figure 2 can be extended or retracted. Likewise, a similar rope or cable inlet can be provided, through which the connecting portion 11d of Figure 2 enters into the housing 20a.

The torque limiter 17 preferably comprises at least two pressure plates 17a, 17b that are mounted to the drive shaft 19, and at least one torque limiter disk 17c that is mounted to the traction drum 18 and arranged between the at least two pressure plates 17a, 17b. Preferably, the at least one torque limiter disk 17c is an integral part of the traction drum 18, i. e. forming a one-piece component therewith.

It should be noted that the above described configuration merely describes a preferred embodiment and that alternative implementations are also possible and contemplated. For instance, implementation of such a one-piece component can be avoided. Instead, the at least two pressure plates 17a, 17b may be provided with a friction material and linked to the traction drum 18 by means of suitable teeth, while the at least one torque limiter disk 17c is linked to the synchronization shaft 11e by means of other suitable teeth.

According to one aspect of the present invention, the at least two pressure plates 17a, 17b are pressed against the at least one torque limiter disk 17c for creating a friction force between the at least two pressure plates 17a, 17b and the at least one torque limiter disk 17c. This friction force is preferably created by means of a plurality of plate springs 17d that are mounted to the drive shaft 19 for exerting a predetermined pressure force on the at least two pressure plates 17a, 17b in a direction 17e that preferably points towards the transmission shaft 14d. The plate springs 17d are preferentially embodied as Belleville spring washers, which are illustratively arranged in a region between the bearing 19b and the at least two pressure plates 17a, 17b. However, other plate spring types are likewise contemplated.

It should be noted that the torque limiter 17 is preferably embodied according to the functional principle of a disk brake. Thus, a further explanation of the torque limiter and its functioning can be omitted, for brevity and conciseness.

Kinematically, the torque limiter 17 is preferably arranged between the traction drum 18 and the cycloidal or epicycloidal reduction gearing 16. The latter is preferentially embodied as a cycloidal reduction gearing, which is also arranged inside of the housing 20a and illustratively, but not mandatorily, comprises two cycloidal disks 16a, 16b. These two cycloidal disks 16a, 16b are connected to the transmission shaft 14d in order to be driven therefrom in operation. They are further connected to the drive shaft 19 for driving the latter in operation. Illustratively, the drive shaft 19 is mounted to the housing 20a by means of bearings 19a, 19b, which are illustratively, but not mandatorily, embodied as roller or ball bearings.

It should be noted that mounting of a cycloidal or epicycloidal reduction gearing to a housing and its arrangement therein as such is well-known in the art and not part of the present invention. Therefore, a detailed description thereof can be omitted for brevity and conciseness.

In operation of the traction drum assembly 20, the Belleville spring washers 17d exert the predetermined pressure force in the direction 17e on the at least two pressure plates 17a, 17b. Thus, the drive shaft 19 may entrain the traction drum 18 into a rotational movement or prevent such a rotational movement of the traction drum 18 as long as the friction force between the at least two pressure plates 17a, 17b and the at least one torque limiter disk 17c exceeds an external torque acting on the traction drum 18, e. g. by pulling the external load mass rope or cable 3b of Figure 2. If, however, this external torque exceeds a predetermined maximum allowable torque that amounts to a maximum friction force between the at least two pressure plates 17a, 17b and the at least one torque limiter disk 17c, the torque limiter 17 releases the traction drum 18, which is then rotated as a result of the external torque.

Figure 4 shows the winch system 3 of Figure 1 with the storage subsystem 5 and the traction subsystem 6 of Figure 2, which are now embodied according to a variant of the present invention. More specifically, in contrast to the first variant of Figure 2, the brake 15 of the traction subsystem 6 is now arranged upstream of the drive motor 14 of Figure 2 for braking the motor shaft 14c thereof and the storage subsystem 5 is now provided with a separate drive motor 7, which is preferably an electric motor with a stator 7a, a rotor 7b and a motor shaft 7c. The latter is preferably connected to the drive shaft 11a of the storage drum 11 of Figure 2 via a reduction gearing 8, such as a cycloidal or epicycloidal reduction gearing, and via a brake 9, such as a Weston brake.

For simplicity and clarity, the drive motor 7 of the storage subsystem 5 is hereinafter referred to as the "storage motor 7". Similarly, the drive motor 14 of the traction subsystem 5 is hereinafter referred to as the "traction motor 14".

However, besides the provision of the storage motor 7, the main difference between the variants of Figure 2 and Figure 4 is that the mechanical control system 13 of Figure 2 is now replaced by an electronic control system 13a with a tension sensor 12, such as a mechanical, electrical and/or optical sensor. The tension sensor 12 is preferably provided for detecting a current rope or cable tension of the connecting portion 11d of the external load mass rope or cable 3b in operation, and the control system 13a is provided for driving the storage motor 7 on the basis of the detected current rope or cable tension.

More specifically, according to one aspect of the present invention, the control system 13a is adapted for slowing down or accelerating the storage motor 7 in operation, if the detected current rope or cable tension deviates from a predetermined rope or cable tension by more than a predetermined allowable tension deviation value. The control system 13a is preferably further adapted for inverting a rotation direction of the storage motor 7, if no further slowing down is possible.

It should be noted that provision of the tension sensor 12 is not mandatory and other solutions are likewise contemplated. For instance, instead of using the tension sensor 12, the control system 13a can e. g. be adapted for controlling the storage motor 7 on the basis of a momentary operating current thereof. Therefore, such other solutions are also considered as being part of the present invention.

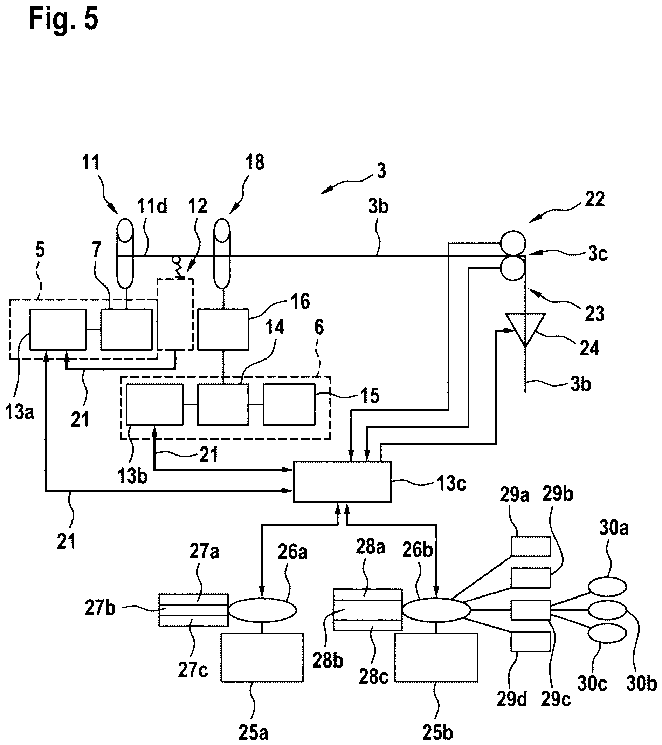

Figure 5 shows the winch system 3 of Figure 4 in the form of a function diagram for illustrating the functional principle thereof. However, in contrast to Figure 4, the control system 13a now merely defines a storage motor controller, while the traction subsystem 6 is provided with a separate traction motor controller 13b, both of which are linked to a main controller 13c via associated RS 232 communication buses 21.

Furthermore, additional optional function components are now included into the winch system 3 by way of example, such as at least one length encoder 22, which is preferably embodied as an absolute encoder sensor, at least one force sensor 23 and at least one cutter 24, all of which are preferably connected to the main controller 13c. The at least one length encoder 22 and the at least one force sensor 23 are adapted for providing information about operating conditions of the winch system 3 to the main controller 13c, while the at least one cutter 24 can be controlled by the main controller 13c for cutting the external load mass rope or cable 3b e. g. in the above-described safety mode.

Moreover, the winch system 3 is shown in an exemplary operating environment that can be implemented e. g. in the helicopter 1 of Figure 1. More specifically, according to one aspect of the present invention, the main controller 13c is at least connected to a pilot and/or copilot control box 26a, and can further be connected to a hoist or winch system operator control box 26b. The pilot and/or copilot control box 26a is preferably connected to a pilot and/or co-pilot interface 25a, through which the pilot and/or co-pilot may command one or more associated winch system controls, such as a mission selector 27a, an emergency release 27b and a cutter activator 27c.

Similarly, the hoist or winch system operator control box 26b is preferably connected to a winch system operator interface 25b, through which the hoist or winch system operator may command one or more associated winch system controls, such as a winch system ON/OFF switch 28a, an operating thumbwheel 28b and a cutter activator 28c. Preferably, the hoist or winch system operator control box 26b is further connected to a plurality of operating condition indicators, such as e. g. an ON/OFF indicator 29a, a length indicator 29b, advisory lights 29c and intercom three positions 29d. By way of example, the advisory lights 29c are adapted for providing at least a cable fouling indication 30a, an over-temperature indication 30b and a speed indication 30c.

In operation, the storage motor controller controls the storage motor 7 for keeping the rope or cable tension of the connecting portion 11d of the external load mass rope or cable 3b at least essentially constant, as described above. Preferably, this is realized by a continuous measurement of the rope or cable tension via the tension sensor 12 of Figure 4, and by a continuous correction of a drive current flowing through the storage motor 7. To this end, the storage motor controller 13a preferably operates in current control mode. This preferentially allows the storage motor 7 to keep the rope or cable tension of the connecting portion 11d at least essentially constant in operation. Communication between the storage motor controller 13a, which preferably functions as a slave, and the main controller 13c, which preferably functions as a master, is preferentially performed via RS 232 bus standard by means of the RS 232 communication bus 21.

The traction motor controller 13b preferably operates in speed control mode. This mode preferentially allows keeping a predetermined retracting or extending speed of the external load mass rope or cable 3b at least essentially constant. Preferentially, communication between the traction motor controller 13b, which preferably also functions as a slave, and the main controller 13c is also performed via RS 232 bus standard by means of the RS 232 communication bus 21.

In order to eliminate occurrence of slip of the external load mass rope or cable 3b on the traction drum 18, the main controller 13c preferably determines a difference in speed between the traction drum 18 and the storage drum 11. Thus, the storage motor controller 13a can increase a torque applied to the storage drum 11 until the difference in speed is unequal to zero, what in turn corresponds to slip elimination.

Preferably, the main controller 13c is adapted for synchronizing the storage motor controller 13a and the traction motor controller 13b. Furthermore, the main controller 13c is preferentially adapted for initializing and managing exchange of information between both motor controllers 13a, 13b. This information is preferably transmitted via RS 232 bus standard, i. e. by means of the RS 232 communication buses 21.

Moreover, the main controller 13c is preferably adapted for gathering and processing information about a current load, e. g. by means of the force sensor 23, and a current cable length of the connecting portion 11d between the storage drum 11 and the traction drum 18, e. g. by means of the length encoder 22. Furthermore, the main controller 13c is preferably adapted for receiving information about a current temperature of the traction and storage motors 14, 7, e. g. by means of the over-temperature indication 30b. Preferentially, the current temperature of the traction and storage motors 14, 7 is determined on request of the main controller 13c by the traction motor controller 13b and/or the storage motor controller 13a and transmitted to the main controller 13c via RS 232 bus standard, i. e. by the RS 232 communication buses 21. Finally, the main controller 13c preferably also handles control desktop tasks for a respective hoist or winch system operator, e. g. by means of the winch system ON/OFF switch 28a, the operating thumbwheel 28b and the cutter activator 28c, and for the pilot and/or copilot in the case of a rotary-wing aircraft, e. g. by means of the mission selector 27a, the emergency release 27b and the cutter activator 27c.

According to one aspect, an overload condition of the winch system 3 and, in particular, of the external load mass rope or cable 3b is either determined directly by means of the above-mentioned force sensor 23, or indirectly by measurement and evaluation of an electrical current flowing through corresponding motor windings of the traction motor 14. In the latter case, the electrical current is preferably measured and evaluated by means of the traction motor controller 13b.

Preferably, the overload condition is controlled only during lifting up of an external load, e. g. the external load 4 of Figure 1, i. e. when storing the external load mass rope or cable 3b on the storage drum 11. During descending of the external load 4 of Figure 1, i. e. during delivering of the external load mass rope or cable 3b from the storage drum 11, control of the overload condition is preferably only performed by a respective hoist or winch system operator. If the overload condition occurs, preferably the electrical current flowing through the traction motor 14 is suspended and the brake 15 is switched off.

The complexity of the control systems described above can be adapted in an application-specific manner. By way of example, instead of providing the control system 13 of Figure 2 only with a single transmission chain consisting of the pinions 13d, 13e, the free wheels 13f, 13h and the drive chain or belt 13g, which is active in the storing and retracting mode of the winch system 3, a similar transmission chain can be provided that is active in the delivering and extending mode of the winch system 3. Another example would be the complexity of the control structure in Figure 5, where the controller 13a, 13b, 13c could be implemented as a single controller. A further example would be provision of a motor with an integrated reducer instead of the storage drive motor. Still a further example would be the provision of a plurality of torque limiter disks, each one being associated with corresponding pressure plates, wherein the torque limiter disks are rotationally stationary but axially moveable inside the traction drum, e. g. by means of suitable cannelures, within certain movement limits, and so on.

### Reference List

- 1: rotary-wing aircraft
- 1a: multi-blade rotor
- 1b, 1c, 1d, 1e: rotor blades
- 1f: rotor head
- 1g: rotor shaft
- 2: fuselage
- 2a: cabin
- 3: winch system
- 3a: outer shell
- 3b: external load mass rope or cable
- 3c: guide pulley
- 4: external load
- 5: storage subsystem
- 6: traction subsystem
- 7: storage subsystem motor
- 7a: stator
- 7b: rotor
- 7c: motor shaft
- 8: gearing
- 9: storage subsystem brake
- 10: storage subsystem torque limiter
- 11: storage subsystem drum
- 11a: drum drive shaft
- 11b: diamond screw
- 11c: drum movement direction
- 11d: drum connecting rope or cable section
- 11e: storage subsystem synchronization shaft
- 12: rope or cable tension sensor
- 12a: rope or cable tensioning device
- 13: rope or cable tension control system
- 13a: storage motor control
- 13b: traction motor control
- 13c: main controller
- 13d, 13e: pinions
- 13f, 13h: free wheels
- 13g: chain or belt
- 14: traction subsystem motor
- 14a: stator
- 14b: rotor
- 14c: motor shaft
- 14d: transmission shaft
- 14e: traction subsystem synchronization shaft
- 15: traction subsystem brake
- 16: traction subsystem gearing
- 16a: first cycloidal disk
- 16b: second cycloidal disk
- 17: traction subsystem torque limiter
- 17a: outer torque limiter pressure plates
- 17b: inner torque limiter pressure plates
- 17c: torque limiter disk
- 17d: Belleville spring washers
- 17e: direction of spring force
- 18: traction subsystem drum
- 18a, 18b: drum bearings
- 19: drum drive shaft
- 19a, 19b: drive shaft bearings
- 20: traction subsystem drum assembly
- 20a: assembly housing
- 20b: rope or cable outlet
- 21: communication buses
- 22: length encoder
- 23: force sensor
- 24: cutter
- 25a: pilot/copilot interface
- 25b: winch system operator interface
- 26a: pilot/copilot control box
- 26b: winch system operator control box
- 27a: mission selector
- 27b: emergency release
- 27c: rope or cable cutter activator
- 28a: winch system ON/OFF push button
- 28b: thumbwheel
- 28c: rope or cable cutter activator
- 29a: ON/OFF indicator
- 29b: length indicator
- 29c: advisory lights
- 29d: intercom three positions
- 30a: cable fouling indication
- 30b: over-temperature indication
- 30c: speed indication

## Claims

1. A winch system (3) with a storage subsystem (5) and a traction subsystem (6), said traction subsystem (6) comprising a traction drum assembly (20) with a traction drum (18) for extending or retracting an external load mass rope or cable (3b) in operation, and said storage subsystem (5) comprising a storage drum (11) for storing said external load mass rope or cable (3b) that is fed in operation from said traction drum (18) or for delivering said external load mass rope or cable (3b) in operation to said traction drum (18), wherein said storage drum (11) and said traction drum (18) are interconnected by means of a connecting portion (11d) of said external load mass rope or cable (3b) that is arranged between said storage drum (11) and said traction drum (18), and wherein said traction drum (18) and said storage drum (11) are adapted to be driven in operation such that a current rope or cable tension of said connecting portion (11d) of said external load mass rope or cable (3b) is comprised in a predetermined interval of tension values so that sagging of the connecting portion (11d) is avoided, **characterized in that** said storage drum (11) is axially moveable by means of a diamond screw (11b) in operation such that said connecting portion (11d) of said external load mass rope or cable (3b) is arranged stationary between said storage drum (11) and said traction drum (18).

2. The winch system (3) according to claim 1,
**characterized in that** a control system (13) is provided that is adapted for driving said storage drum (11) in operation, such that said current rope or cable tension of said connecting portion (11d) is comprised in said predetermined interval of tension values.

3. The winch system (3) according to claim 2, **characterized in that** said control system (13) is adapted for controlling a synchronization shaft (11e) that is provided for driving said storage drum (11) in operation, wherein said synchronization shaft is coupled with a torque limiter (10) that is adapted to maintain said current rope or cable tension of said connecting portion (11d) in operation within said predetermined interval of tension values.

4. The winch system (3) according to claim 2,
**characterized in that** said traction subsystem (6) comprises a drive motor (14) for driving said traction drum (18), said drive motor (14) being coupled to said control system (13) for driving said storage subsystem (5) via said control system (13).

5. The winch system (3) according to claim 4,
**characterized in that** said control system (13) comprises a first synchronization shaft (14e) and a second synchronization shaft (11e), said first synchronization shaft (14e) being driveable by said drive motor (14) and comprising a free wheel (13f) that can be coupled to a first pinion (13e), and said second synchronization shaft (11e) being adapted for driving said storage drum (11) and comprising a second pinion (13d), said first pinion (13e) and said second pinion (13d) being coupled by means of a drive chain or belt (13g).

6. The winch system (3) according to claim 5,
**characterized in that** said free wheel (13f) is adapted for coupling said first pinion (13e) to said first synchronization shaft (14e) during storing of said external load mass rope or cable (3b) that is fed in operation from said traction drum (18) on said storage drum (11).

7. The winch system (3) according to claim 5,
**characterized in that** said second synchronization shaft (11e) comprises a free wheel (13h) that is adapted for being engaged in a delivering and extending mode of said winch system (3) in order to block rotation of said second synchronization shaft (11e) in a delivering rotational direction.

8. The winch system (3) according to claim 1,
**characterized in that** said traction drum (18) is driveable by means of a drive shaft (19), said traction drum assembly (20) comprising a torque limiter (17) that is adapted for decoupling said traction drum (18) from said drive shaft (19), if torque acting on said traction drum (18) in operation exceeds a predetermined maximum allowable torque.

9. The winch system (3) according to claim 1,
**characterized in that** said traction subsystem (6) comprises a first drive motor (14) for driving said traction drum (18) and said storage subsystem (5) comprises a second drive motor (7) for driving said storage drum (11).

10. The winch system (3) according to claim 9,
**characterized in that** a tension sensor (12) is provided for detecting said current rope or cable tension of said connecting portion (11d) of said external load mass rope or cable (3b), and that a control system (13a) is provided that is adapted for driving said second drive motor (7) on the basis of said detected current rope or cable tension.

11. The winch system (3) according to claim 10,
**characterized in that** said control system (13a) is adapted for slowing down or accelerating said second drive motor (7) in operation, if said detected current rope or cable tension of said connecting portion (11d) of said external load mass rope or cable (3b) deviates from a predetermined rope or cable tension by more than a predetermined allowable tension deviation value.

12. The winch system (3) according to claim 11,
**characterized in that** said control system (13a) is adapted for inverting a rotation direction of said second drive motor (7), if no further slowing down is possible.

13. The winch system (3) according to claim 9,
**characterized in that** said traction drum (18) is driveable by means of a first drive shaft (19) that is driveable by said first drive motor (14), and that said storage drum (11) is driveable by means of a second drive shaft (11a) that is driveable by said second drive motor (7), said first and second drive shafts (19, 11a) being at least approximately arranged in parallel.

14. The winch system (3) according to claim 10,
**characterized in that** said tension sensor (12) comprises a mechanical, electrical and/or optical sensor.

15. The winch system (3) according to claim 9,
**characterized in that** said traction drum (18) is driveable by means of a drive shaft (19) that is driveable by said first drive motor (14), said traction drum assembly (20) comprising a torque limiter (17) that is adapted for decoupling said traction drum (18) from said drive shaft (19), if torque acting on said traction drum (18) in operation exceeds a predetermined maximum allowable torque.

16. The winch system (3) according to claim 1, **characterized in that** said traction drum assembly (20) comprises a housing (20a), said traction drum assembly (20) further comprising a reduction gearing (16) that is arranged inside of said housing (20a).

17. The winch system (3) according to claim 16, **characterized in that** said reduction gearing (16) is a cycloidal or epicycloidal reduction gearing (16).

18. The winch system (3) according to claim 9, **characterized in that** a motor control (13a) is provided for controlling said second drive motor (7) on the basis of a momentary operating current of said second drive motor (7).

19. The winch system (3) according to claim 1, **characterized in that** a brake (9, 15) is associated with said traction drum (18) and/or said storage drum (11) for braking said traction drum (18) and/or said storage drum (11) in an associated park mode, said brake (9, 15) being preferably embodied as a Weston brake.

20. A rotary-wing aircraft (1) with a winch system (3) according to one of the claims 1 to 19.

## Patentansprüche

1. Windensystem (3) mit einem Speicher-Teilsystem (5) und einem Zug-Teilsystem (6), wobei das Zug-Teilsystem (6) eine Zugtrommelanordnung (20) mit einer Zugtrommel (18) zum Ausrollen oder Einholen eines externen Lastmassenseils oder -kabels (3b) im Betrieb umfasst, und das Speicher-Teilsystem (5) eine Speichertrommel (11) zum Speichern des im Betrieb von der Zugtrommel (18) zugeführten externen Lastmassenseils oder -kabels (3b) oder zum Zuführen des externen Lastmassenseils oder -kabels (3b) im Betrieb zu der Zugtrommel (18) umfasst, wobei die Speichertrommel (11) und die Zugtrommel (18) mittels eines Verbindungsabschnitts (11d) des externen Lastmassenseils oder -kabels (3b) miteinander verbunden sind, der zwischen der Speichertrommel (11) und der Zugtrommel (18) angeordnet ist, und wobei die Zugtrommel (18) und die Speichertrommel (11) eingerichtet sind, um im Betrieb so angetrieben zu werden, dass eine aktuelle Seil- oder Kabelspannung des Verbindungsabschnitts (11d) des externen Lastmassenseils oder -kabels (3b) in einem vorgegebenen Intervall von Spannungswerten liegt, so dass ein Durchhängen des Verbindungsabschnitts (11d) vermieden wird, **dadurch gekennzeichnet, dass** die Speichertrommel (11) mittels einer Kreuzgewindespindel (11b) im Betrieb axial beweglich ist, so dass der Verbindungsabschnitt (11d) des externen Lastmassenseils oder -kabels (3b) stationär zwischen der Speichertrommel (11) und der Zugtrommel (18) angeordnet ist.

2. Windensystem (3) nach Anspruch 1,
**dadurch gekennzeichnet, dass** ein Steuersystem (13) vorgesehen ist, das eingerichtet ist, die Speichertrommel (11) im Betrieb so anzutreiben, dass die aktuelle Seil- oder Kabelspannung des Verbindungsabschnitts (11d) in dem vorgegebenen Intervall von Spannungswerten liegt.

3. Windensystem (3) nach Anspruch 2,
**dadurch gekennzeichnet, dass** das Steuersystem (13) eingerichtet ist, um eine Synchronisationswelle (11e) zu steuern, die vorgesehen ist, um im Betrieb die Speichertrommel (11) anzutreiben, wobei die Synchronisationswelle mit einem Drehmomentbegrenzer (10) gekoppelt ist, der eingerichtet ist, um im Betrieb die aktuelle Seil- oder Kabelspannung des Verbindungsabschnitts (11d) innerhalb des vorgegebenen Intervalls von Spannungswerten zu halten.

4. Windensystem (3) nach Anspruch 2,
**dadurch gekennzeichnet, dass** das Zug-Teilsystem (6) einen Antriebsmotor (14) zum Antreiben der Zugtrommel (18) umfasst, wobei der Antriebsmotor (14) mit dem Steuersystem (13) gekoppelt ist, um das Speicher-Teilsystem (5) über das Steuersystem (13) anzutreiben.

5. Windensystem (3) nach Anspruch 4,
**dadurch gekennzeichnet, dass** das Steuersystem (13) eine erste Synchronisationswelle (14e) und eine zweite Synchronisationswelle (11e) umfasst, wobei die erste Synchronisationswelle (14e) von dem Antriebsmotor (14) antreibbar ist und ein Freilaufrad (13f) umfasst, das mit einem ersten Ritzel (13e) gekoppelt werden kann, und wobei die zweite Synchronisationswelle (11e) zum Antreiben der Speichertrommel (11) eingerichtet ist und ein zweites Ritzel (13d) umfasst, wobei das erste Ritzel (13e) und das zweite Ritzel (13d) mittels einer Antriebskette oder eines Riemens (13g) gekoppelt sind.

6. Windensystem (3) nach Anspruch 5,
**dadurch gekennzeichnet, dass** das Freilaufrad (13f) eingerichtet ist, um während des Speicherns des externen Lastmassenseils oder -kabels (3b), das im Betrieb von der Zugtrommel (18) der Speichertrommel (11) zugeführt wird, das erste Ritzel (13e) mit der ersten Synchronisationswelle (14e) zu koppeln.

7. Windensystem (3) nach Anspruch 5,
**dadurch gekennzeichnet, dass** die zweite Synchronisationswelle (11e) ein Freilaufrad (13h) aufweist, das eingerichtet ist, um in einem Ausgabe-und Ausrollmodus des Windensystems (3) in Eingriff gebracht zu werden, um die Drehung der zweiten Synchronisationswelle (11e) in einer Ausgabedrehrichtung zu blockieren.

8. Windensystem (3) nach Anspruch 1,
**dadurch gekennzeichnet, dass** die Zugtrommel (18) mittels einer Antriebswelle (19) antreibbar ist, wobei die Zugtrommelanordnung (20) einen Drehmomentbegrenzer (17) umfasst, der eingerichtet ist, um die Zugtrommel (18) von der Antriebswelle (19) zu entkoppeln, wenn das im Betrieb auf die Zugtrommel (18) wirkende Drehmoment ein vorgegebenes maximal zulässiges Drehmoment überschreitet.

9. Windensystem (3) nach Anspruch 1,
**dadurch gekennzeichnet, dass** das Zug-Teilsystem (6) einen ersten Antriebsmotor (14) zum Antreiben der Zugtrommel (18) umfasst und das Speicher-Teilsystem (5) einen zweiten Antriebsmotor (7) zum Antreiben der Speichertrommel (11) umfasst.

10. Windensystem (3) nach Anspruch 9,
**dadurch gekennzeichnet, dass** ein Spannungssensor (12) zum Erfassen der aktuellen Seil- oder Kabelspannung des Verbindungsabschnitts (11d) des externen Lastmassenseils oder -kabels (3b) vorgesehen ist, und dass ein Steuersystem (13a) vorgesehen ist, das eingerichtet ist, den zweiten Antriebsmotor (7) auf der Grundlage der erfassten aktuellen Seil- oder Kabelspannung anzutreiben.

11. Windensystem (3) nach Anspruch 10,
**dadurch gekennzeichnet, dass** das Steuersystem (13a) eingerichtet ist, den zweiten Antriebsmotor (7) im Betrieb zu verlangsamen oder zu beschleunigen, wenn die erfasste aktuelle Seil- oder Kabelspannung des Verbindungsabschnitts (11d) des externen Lastmassenseils oder -kabels (3b) von einer vorgegebenen Seil- oder Kabelspannung um mehr als einen vorgegebenen zulässigen Spannungsabweichungswert abweicht.

12. Windensystem (3) nach Anspruch 11,
**dadurch gekennzeichnet, dass** das Steuersystem (13a) eingerichtet ist, um eine Drehrichtung des zweiten Antriebsmotors (7) umzukehren, wenn keine weitere Verlangsamung möglich ist.

13. Windensystem (3) nach Anspruch 9,
**dadurch gekennzeichnet, dass** die Zugtrommel (18) mittels einer ersten Antriebswelle (19) antreibbar ist, die von dem ersten Antriebsmotor (14) antreibbar ist, und dass die Speichertrommel (11) mittels einer zweiten Antriebswelle (11a) antreibbar ist, die von dem zweiten Antriebsmotor (7) antreibbar ist, wobei die erste und die zweite Antriebswelle (19, 11a) zumindest annähernd parallel angeordnet sind.

14. Windensystem (3) nach Anspruch 10,
**dadurch gekennzeichnet, dass** der Spannungssensor (12) einen mechanischen, elektrischen und/oder optischen Sensor umfasst.

15. Windensystem (3) nach Anspruch 9,
**dadurch gekennzeichnet, dass** die Zugtrommel (18) mittels einer Antriebswelle (19) antreibbar ist, die durch den ersten Antriebsmotor (14) antreibbar ist, wobei die Zugtrommelanordnung (20) einen Drehmomentbegrenzer (17) umfasst, der eingerichtet ist, um die Zugtrommel (18) von der Antriebswelle (19) zu entkoppeln, wenn das im Betrieb auf die Zugtrommel (18) wirkende Drehmoment ein vorgegebenes maximal zulässiges Drehmoment überschreitet.

16. Windensystem (3) nach Anspruch 1,
**dadurch gekennzeichnet, dass** die Zugtrommelanordnung (20) ein Gehäuse (20a) umfasst, wobei die Zugtrommelanordnung (20) ferner ein Untersetzungsgetriebe (16) umfasst, das innerhalb des Gehäuses (20a) angeordnet ist.

17. Windensystem (3) nach Anspruch 16,
**dadurch gekennzeichnet, dass** das Untersetzungsgetriebe (16) ein Zykloiden- oder Epizykloiden-Untersetzungsgetriebe (16) ist.

18. Windensystem (3) nach Anspruch 9,
**dadurch gekennzeichnet, dass** eine Motorsteuerung (13a) zur Steuerung des zweiten Antriebsmotors (7) auf der Basis eines momentanen Betriebsstroms des zweiten Antriebsmotors (7) vorgesehen ist.

19. Windensystem (3) nach Anspruch 1,
**dadurch gekennzeichnet, dass** der Zugtrommel (18) und/oder der Speichertrommel (11) eine Bremse (9, 15) zum Abbremsen der Zugtrommel (18) und/oder der Speichertrommel (11) in einem zugeordneten Parkmodus zugeordnet ist, wobei die Bremse (9, 15) vorzugsweise als Weston-Bremse ausgebildet ist.

20. Drehflügelflugzeug (1) mit einem Windensystem (3) nach einem der Ansprüche 1 bis 19.

## Revendications

1. Système de treuillage (3) avec un sous-système d'emmagasinage (5) et un sous-système de traction (6), ledit sous-système de traction (6) comprenant un ensemble à tambour de traction (20) avec un tambour de traction (18) pour faire extraire ou rétracter un cordage ou un câble (3b) de chargement externe en fonctionnement, et ledit sous-système d'emmagasinage (5) comprenant un tambour d'emmagasinage (11) pour emmagasiner ledit cordage ou câble (3b) de chargement externe qui provient en fonctionnement dudit tambour de traction (18) ou pour délivrer ledit cordage ou câble (3b) de chargement externe en fonctionnement vers ledit tambour de traction (18), dans lequel ledit tambour d'emmagasinage (11) et ledit tambour de traction (18) sont reliés à l'aide d'une partie de connexion (11d) dudit cordage ou câble (3b) de chargement externe qui est agencée entre ledit tambour d'emmagasinage (11) et ledit tambour de traction (18), et dans lequel ledit tambour de traction (18) et ledit tambour d'emmagasinage (11) sont aptes à être entrainés en fonctionnement de façon qu'une tension courante de cordage ou de câble de ladite partie de connexion (11d) dudit cordage ou câble (3b) de chargement externe soit comprise dans un intervalle prédéterminé de valeurs de tension afin qu'un fléchissement de la partie de connexion (11d) est évité, **caractérisé en ce que** ledit tambour d'emmagasinage (11) est déplaçable axialement en fonctionnement à l'aide d'une vis à filetage diamant (11b) de trancannage, de sorte que ladite partie de connexion (11d) dudit cordage ou câble (3b) de chargement externe soit agencée de façon stationnaire entre ledit tambour d'emmagasinage (11) et ledit tambour de traction (18).

2. Système de treuillage (3) selon la revendication 1, **caractérisé en ce qu'**un système de commande (13) est prévu, qui est apte à entrainer ledit tambour d'emmagasinage (11) en fonctionnement, de façon que ladite tension courante de cordage ou de câble de ladite partie de connexion (11d) soit comprise dans ledit intervalle prédéterminé de valeurs de tension.

3. Système de treuillage (3) selon la revendication 2,
**caractérisé en ce que** ledit système de commande (13) est apte à commander un arbre de synchronisation (11e) qui est prévu pour entrainer ledit tambour d'emmagasinage (11) en fonctionnement, dans lequel ledit arbre de synchronisation est couplé avec un limiteur de couple (10) qui est apte à maintenir ladite tension courante de cordage ou de câble de ladite partie de connexion (11d) en fonctionnement dans un intervalle prédéterminé de valeurs de tension.

4. Système de treuillage (3) selon la revendication 2,
**caractérisé en ce que** ledit sous-système de traction (6) comprend un moteur d'entrainement (14) pour entrainer ledit tambour de traction (18), ledit moteur d'entrainement (14) étant couplé audit système de commande (13) pour entrainer ledit sous-système d'emmagasinage (5) via ledit système de commande (13).

5. Système de treuillage (3) selon la revendication 4,
**caractérisé en ce que** ledit système de commande (13) comprend un premier arbre de synchronisation (14e) et un second arbre de synchronisation (11e), ledit premier arbre de synchronisation (14e) étant entrainable par ledit moteur d'entrainement (14) et comprenant une roue libre (13f) qui peut être couplée à un premier pignon (13e), et ledit second arbre de synchronisation (11e) étant apte à entrainer ledit tambour d'emmagasinage (11) et comprenant un second pignon (13d), ledit premier pignon (13e) et ledit second pignon (13d) étant couplés à l'aide d'une chaine ou d'une courroie d'entrainement (13g).

6. Système de treuillage (3) selon la revendication 5,
**caractérisé en ce que** ladite roue libre (13f) est apte à coupler ledit premier pignon (13e) audit premier arbre de synchronisation (14e) lors de l'emmagasinage sur ledit tambour d'emmagasinage (11) dudit cordage ou câble (3b) de chargement externe qui provient en fonctionnement dudit tambour de traction (18).

7. Système de treuillage (3) selon la revendication 5,
**caractérisé en ce que** ledit second arbre de synchronisation (11e) comprend une roue libre (13h) qui est apte à être enclenchée dans un mode de débit et de sortie dudit système de treuillage (3) afin de bloquer la rotation dudit second arbre de synchronisation (11e) dans un sens de rotation de débit.

8. Système de treuillage (3) selon la revendication 1,
**caractérisé en ce que** ledit tambour de traction (18) est entrainable à l'aide d'un arbre d'entrainement (19), ledit ensemble à tambour de traction (20) comprenant un limiteur de couple (17) qui est apte à découpler ledit tambour de traction (18) dudit arbre d'entrainement (19) si le couple exercé sur ledit tambour de traction (18) en fonctionnement dépasse un couple admissible maximal prédéterminé.

9. Système de treuillage (3) selon la revendication 1,
**caractérisé en ce que** ledit sous-système de traction (6) comprend un premier moteur d'entrainement (14) pour entrainer ledit tambour de traction (18) et ledit sous-système d'emmagasinage (5) comprend un second moteur d'entrainement (7) pour entrainer ledit tambour d'emmagasinage (11).

10. Système de treuillage (3) selon la revendication 9,
**caractérisé en ce qu'**un capteur de tension (12) est prévu pour détecter ladite tension courante de cordage ou de câble de ladite partie de connexion (11d) dudit cordage ou câble (3b) de chargement externe, et qu'un système de commande (13a) est prévu qui est apte à entrainer ledit second moteur d'entrainement (7) sur la base de ladite tension courante de cordage ou de câble détectée.

11. Système de treuillage (3) selon la revendication 10,
**caractérisé en ce que** ledit système de commande (13a) est apte à faire ralentir ou accélérer ledit second moteur d'entrainement (7) en fonctionnement, si ladite tension courante de cordage ou de câble de ladite partie de connexion (11d) dudit cordage ou câble (3b) de chargement externe détectée s'écarte d'une tension prédéterminée de cordage ou de câble au-delà d'une valeur prédéterminée d'écart de tension admissible.

12. Système de treuillage (3) selon la revendication 11,
**caractérisé en ce que** ledit système de commande (13a) est apte à inverser le sens de rotation dudit second moteur d'entrainement (7), si aucun ralentissement supplémentaire n'est possible.

13. Système de treuillage (3) selon la revendication 9,
**caractérisé en ce que** ledit tambour de traction (18) est entrainable à l'aide d'un premier arbre d'entrainement (19) qui est entrainable par ledit premier moteur d'entrainement (14), et **en ce que** ledit tambour d'emmagasinage (11) est entrainable à l'aide d'un second arbre d'entrainement (11a) qui est entrainable par ledit second moteur d'entrainement (7), lesdits premier et second arbres d'entrainement (19, 11a) étant au moins approximativement agencés en parallèle.

14. Système de treuillage (3) selon la revendication 10,
**caractérisé en ce que** ledit capteur de tension (12) comprend un capteur mécanique, électrique et/ou optique.

15. Système de treuillage (3) selon la revendication 9,
**caractérisé en ce que** ledit tambour de traction (18) est entrainable à l'aide d'un arbre d'entrainement (19) qui est entrainable par ledit premier moteur d'entrainement (14), ledit ensemble à tambour de traction (20) comprenant un limiteur de couple (17) qui est apte à découpler ledit tambour de traction (18) dudit arbre d'entrainement (19), si le couple exercé sur ledit tambour de traction (18) en fonctionnement dépasse un couple admissible maximal prédéterminé.

16. Système de treuillage (3) selon la revendication 1,
**caractérisé en ce que** ledit ensemble à tambour de traction (20) comprend un logement (20a), ledit ensemble à tambour de traction (20) comprenant en outre un engrenage réducteur (16) qui est agencé à l'intérieur dudit logement (20a).

17. Système de treuillage (3) selon la revendication 16,
**caractérisé en ce que** ledit engrenage réducteur (16) est un engrenage réducteur cycloïdal ou épicycloïdal (16).

18. Système de treuillage (3) selon la revendication 9,
**caractérisé en ce qu'**une commande de moteur (13a) est prévue pour commander ledit second moteur d'entrainement (7) sur la base d'un courant de fonctionnement momentané dudit second moteur d'entrainement (7).

19. Système de treuillage (3) selon la revendication 1,
**caractérisé en ce qu'**un frein (9, 15) est associé audit tambour de traction (18) et/ou audit tambour d'emmagasinage (11) pour freiner ledit tambour de traction (18) et/ou ledit tambour d'emmagasinage (11) dans un mode d'immobilisation associé, ledit frein (9, 15) prenant de préférence la forme d'un frein de type Weston.

20. Aéronef à voilure tournante (1) pourvu d'un système de treuillage (3) selon l'une quelconque des revendications 1 à 19.
